# EUROPEAN PATENT SPECIFICATION

(11) **EP 2 468 604 B1**
(45) Date of publication and mention of the grant of the patent: **07.08.2013**
(21) Application number: 10382349.8
(22) Date of filing: 23.12.2010
(51) Int. Cl.: B62B 3/14, B62B 3/16

(54) **Shopping cart**
Einkaufswagen
Chariot de supermarché

(43) Date of publication of application: 27.06.2012
(73) Proprietor: Glhoe, S.L., 50196 La Muela (ES)
(72) Inventor: Sanjuan Román, Ángel, 50196, La Muela (ES); Sobrino Mara, Silvia, 50196, La Muela (ES)
(74) Representative: Hernández Hernández, Carlos

(56) References cited:
- EP-A1- 1 834 539
- EP-A2- 1 690 772
- WO-A1-2010/106214
- US-A- 3 346 271
- US-A1- 2006 055 133

## Description

### OBJECT OF THE INVENTION

The present invention relates to a shopping cart including a handle for the user to grip and transport said cart, and said cart integrates into a single piece the basket and the handle.

Due to its special configuration it is not necessary to perform additional assembling operations after molding the different components of the cart, since the handle and basket thereof are came up in a single piece from the injection mold.

Moreover, the cart basket has a lower skirt preventing the cart from tipping in any direction parallel to its base.

### BACKGROUND OF THE INVENTION

Carts for transporting products, which are usually located at the entrance of supermarkets and which are used for transporting the products the user wants to buy are well known in the state of the art.

These carts for purchasing products have a basket into which the products the user wants to buy are placed and a handle used for gripping the cart and facilitating its transportation.

These carts have a set of wheels at the bottom of the basket, in contact with the ground, so that it allows moving the basket from one place to another with little effort by the user.

Among the previous is the European patent EP1834539 related to a stacking cart constructed from a prism-shaped single body made of a strong material, such as plastic or the like, with a number of orifices or incuts in all or some of its faces, having at its top part one or more pivoting handles integrated in the upper frame or edge thereof, and some wheels on the lower face.

It also has a telescopic handle located on one of the side faces of the basket allowing it to be moved by the user in a comfortable and simple manner.

The previous cart arises the drawback that by being the handle telescopic, the cart has to be made up from two pieces, one for the handle and one for the basket, which involves a very high investment in the case where both are made up by molding, since two molds are required, in addition to require an additional operation for assembling the handle to the basket.

Also in the cart of the European patent EP1834539, fixing the handle to the basket ends up deteriorating thereof due to the successive movements of the handle during its lifting and lowering.

All these drawbacks are solved by the invention to be now described.

In the state of the art there are several shopping carts known, one of them, I the one disclosed in EP 1690772, according to the preamble of claim 1, wherein it is disclosed a bucket which comprises generally vertical sidewalls and a bottom portion, defining together a bucket interior. The bucket further comprises a back face, constituting one of the sidewalls, which extends substantially above the height of the bucket interior. The bucket still further comprises at least two wheels mounted to the bucket at the back face about an axis at a bottom area thereof.

Additionally, in document US 3346271, it is disclosed a nestable cart made of molded material having a handle integrated with the rest of the cart.

Finally, in the document WO 2010106214 it is disclosed a basket used for shopping of the type commonly used in self-service shops and/or supermarkets that have wheels that enable the 360° rotation of its base part and an extendable or telescopic pulling handle on one of its faces and whose base part also includes seats for interchangeably coupling said wheels.

### DESCRIPTION OF THE INVENTION

The present invention as defined in claim 1 relates to a shopping cart comprising a handle for the user to grip and transport said cart, and a basket into which the products the user wants are placed, having wheels arranged at the base of the basket used for rolling the cart along the ground from one place to another with little effort by the user.

The cart integrates the basket and the handle in one piece, so that two molds for making up each of the two pieces are not required, and an additional operation for assembling the handle to the basket is not required.

The cart basket has a perimetral flange preventing the cart from tipping in any direction parallel to its base avoiding the basket from tipping because of its proximity to the basket wheels.

The cart basket also has reinforcing ribs at its lower base stiffening the basket and preventing it from breaking when facing the requests due to the weight of the products placed therein, as well as the impacts that the cart may suffer during transportation.

### DESCRIPTION OF THE DRAWINGS

The present specification is complemented with a set of drawings illustrating the preferred example, and not-limiting the invention.

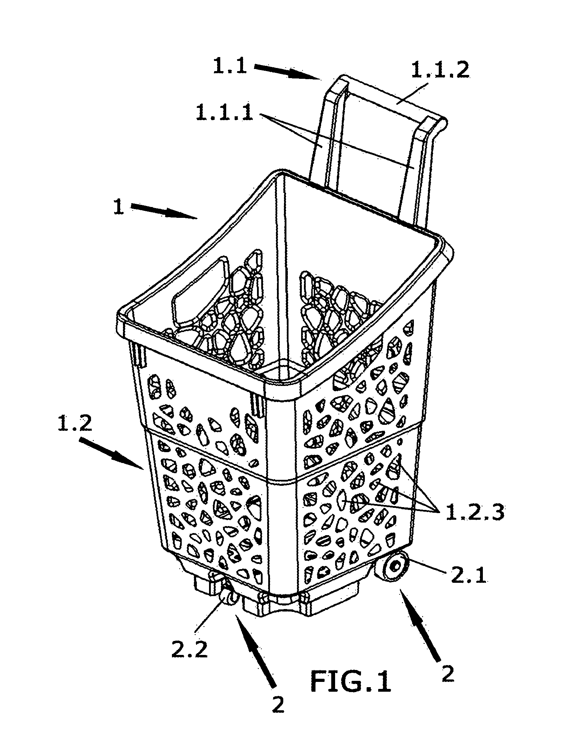

Figure 1 shows a perspective view of the shopping cart of the present invention.

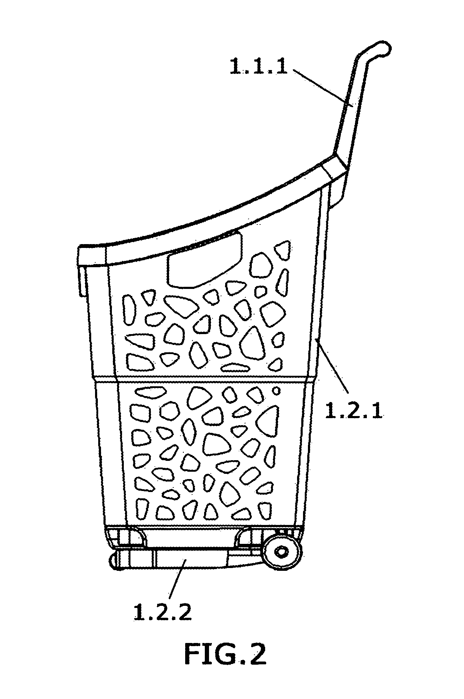

Figure 2 shows a side view of the shopping cart shown in Figure 1.

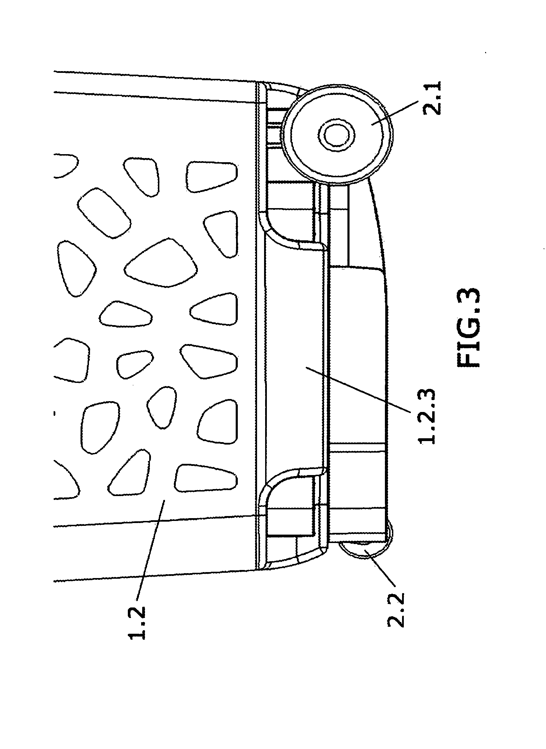

Figure 3 shows a detailed view of Figure 2.
Figure 4 shows a bottom view of the shopping cart shown in Figure 1.
Figure 5 shows a bottom view of the shopping cart shown in Figure 1, wherein all the wheels have been removed.

### PREFERRED EMBODIMENT OF THE INVENTION

In view of the aforementioned, the present invention relates to a shopping cart (1) including a handle (1.1) emerging from the upper edge of a cart basket (1.2), wherein the handle (1.1) has an inverted "U"-shape, and it is used for gripping and transporting said cart (1).

The handle (1.1) has two sections (1.1.1) parallel to the wall (1.2.1) of the basket (1.2) from which said handle (1.1) emerges, and a horizontal section (1.1.2) used for gripping the cart (1).

Because of this configuration wherein the handle (1.1) has two sections (1.1.1) parallel to the wall (1.2.1) of the basket (1.2) from which it emerges, it is possible to stack a set of carts (1) without the handles (1.1) protruding from the space defined by the tower formed by said set of stacked carts (1).

The basket (1.2) and handle (1.1) are integrated in one piece, the cart (1) further having wheels (2) which are coupled into holes (1.2.2.1) arranged at the base (1.2.2) of the basket (1.2).

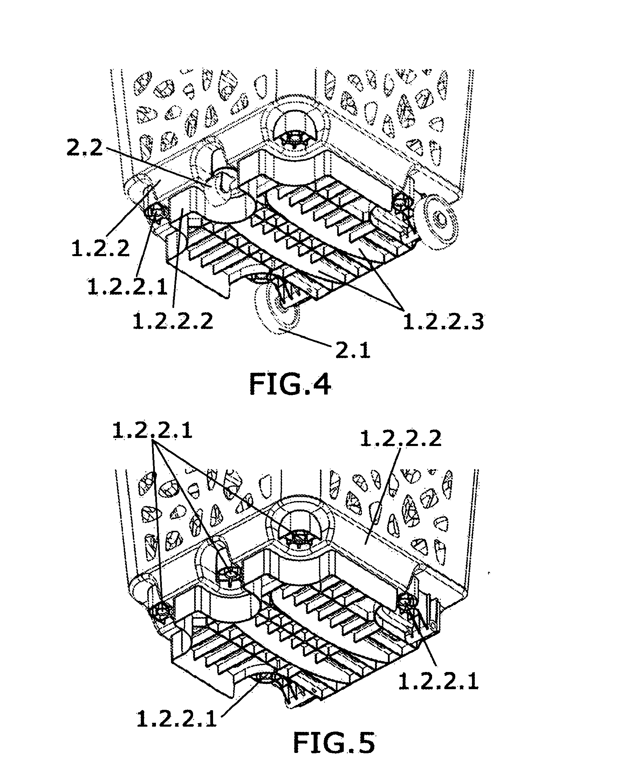

Figure 5 shows a bottom view of the cart of the present invention, wherein all wheels (2) have been removed, and the holes (1.2.2.1) for coupling these wheels (2) are observed, which in this case are five, four of which are arranged at the base (1.2.2) corners and one is arranged at the midpoint of the base (1.2.2) side parallel to the side where the handle (1.1) is.

Into said coupling holes (1.2.2.1) free running wheels (2.1) allowed to be rotated around a vertical axis and/or driving wheels (2.2) having said rotation restricted, can be coupled.

The basket (1.2) of the cart (1) has a perimetral flange (1.2.2.2) arranged at its base (1.2.2) and located at the inner part of the wheels (2) preventing the cart from tipping in any direction parallel to its base (1.2.2).

The basket (1.2) of the cart (1) also has reinforcing ribs (1.2.2.3) at its base (1.2.2), and which are parallel to the parallel sections (1.1.1) of the handle (1.1).

The basket (1.2) has side holes (1.2.3) allowing the aeration and outside visualization of products contained in the cart (1).

Variations in materials, shape, size and arrangement of the component elements, described in a not limitative manner do not alter the essence of this invention, being this sufficient to be reproduced by a skilled person.

## Claims

1. Shopping cart comprising a handle (1.1) for the user to grip and transport said cart (1), and a basket (1.2) into which the products the user wants are placed, having wheels (2) arranged at the base (1.2.2.) of the basket (1.2) used for rolling the cart (1) along the ground, wherein the basket (1.2) and the handle (1.1) are integrated in one piece, **characterized in that** a perimetral flange (1.2.2.2) is arranged at its base (1.2.2) being located at the inner part of the wheels (2), preventing the cart from tipping in any direction parallel to its base (1.2.2).

2. Shopping cart defined in claim 1, **characterized in that** the handle (1.1) emerges from the upper edge cart basket (1.2).

3. Shopping cart defined in claim 1, **characterized in that** the handle (1.1) has an inverted "U" shape.

4. Shopping cart defined in claim 3, **characterized in that** the handle (1.1) has two sections (1.1.1) parallel to the wall (1.2.1) of the basket (1.2) from where said handle (1.1) emerges, and a horizontal section (1.1.2) used for gripping the cart (1).

5. Shopping cart defined in claim 4, **characterized in that** is stackable.

6. Shopping cart defined in claim 4, **characterized in that** the basket (1.2) also has reinforcing ribs (1.2.2.3) at its base (1.2.2) and which are parallel to the parallel sections (1.1.1) of the handle (1.1).

7. Shopping cart defined in claim 1, **characterized in that** the wheels (2) are coupled into holes (1.2.2.1) arranged at the base (1.2.2) of the basket (1.2).

8. Shopping cart defined in claim 7, **characterized in that** the coupling holes (1.2.2.1) of the wheels (2) are five, four of which are arranged at the base (1.2.2) corners and one is arranged at the midpoint of the base (1.2.2) side parallel to the side where the handle (1.1) is.

9. Shopping cart defined in claim 8, **characterized in that** into said coupling holes (1.2.2.1) free running wheels allowed to be rotated around a vertical axis and/or driving wheels having said rotation restricted are coupled.

## Patentansprüche

1. Einkaufswagen mit einem Griff, (1.1) zum Greifen und Transport des Einkaufswagens (1), und mit einem Korb (1.2) zur Einstellung der gewünschten Produkten, mit Räder (2) am Boden (1.2.2) des Korbes (1.2) zum Rollen des Einkaufswagens (1) über den Boden, und mit dem Korb (1.2) und dem Griff (1.1) aus einem einzigen Teil zusammengesetzt, dadurch gekennzeichtnet, dass es einen perimetrischen Rand (1.2.2.2) am Korbboden (1.2.2) auf der inneren Räderseite (2) zur Vermeidung des Umkippens in jede zu dem Einkaufswagenboden (1.2.2) parallele Richtung gibt.

2. Einkaufswagen nach Anspruch 1, **dadurch gekennzeichnet, dass** der Griff (1.1) aus dem Korboberkante (1.2) herauskommt.

3. Einkaufswagen nach Anspruch 1, **dadurch gekennzeichnet, dass** der Griff (1.1) eine umgekehrte "U" Form hat.

4. Einkaufswagen nach Anspruch 3, **dadurch gekennzeichnet, dass** der Griff (1.1) zwei Teilen (1.1.1) hat, parallele zur Seite (1.2.1) des Korbes (1.2), woraus der Griff (1.1) herauskommt, und ein horizontales Teil (1.1.2) zur Haftung des Einkaufswagens (1).

5. Einkaufswagen nach Anspruch 4, **dadurch gekennzeichnet, dass** er stapelbar ist.

6. Einkaufswagen nach Anspruch 4, **dadurch gekennzeichnet, dass** der Korb (1.2) auch Verstärkungsrippen (1.2.2.3) am seinen Boden (1.2.2) hat und welche parallele zu den parallelen Teilen (1.1.1) des Griffes (1.1) sind.

7. Einkaufswagen nach Anspruch 1, **dadurch gekennzeichnet, dass** die Räder (2) in Löchern (1.2.2.1) am Boden (1.2.2) des Korbes (1.2) gekuppelt sind.

8. Einkaufswagen nach Anspruch 7, **dadurch gekennzeichnet, dass** die Kupplungslöcher (1.2.2.1) der Räder (2) fünf sind, vier von deren an der Ecke des Korbbodens (1.2.2) und eins am Mittelpunkt des Korbbodens (1.2.2) parallel zu der Seite, wo der Griff (1.1) ist.

9. Einkaufswagen nach Anspruch 8, **dadurch gekennzeichnet, dass** in den Kupplungslöcher (1.2.2.1) Freilaufräder möglich um ein Vertikalachsen zu rollen und/oder mit gesperter Rotation Antriebsrädern gekuppelt sind.

## Revendications

1. Panier d'achat comprenant une poignée (1.1) pour que l'utilisateur puisse attraper et transporter le panier-chariot (1) et un panier (1.2) dans lequel l'utilisateur place les produits qu'il souhaite, avec des roues (2), disposées sur la base (1,2.2.) du panier (1.2), utilisées pour faire rouler le panier (1) sur le sol, où le panier (1.2) et la poignée (1,1) sont intégrés en une pièce, **caractérisée en ce qu'**un rebord périphérique (1.2.2.2) est disposé à sa base (1.2.2) et situé dans la partie interne des roues (2), empêchant ainsi le panier-chariot de basculer dans n'importe quelle direction parallele à sa base (1.2.2).

2. Panier d'achat selon la revendication 1, **caractérisé en ce que** la poignée (1.1) sort du bord supérieur du panier-chariot (1.2).

3. Panier d'achat selon la revendication 1, **caractérisé en ce que** la poignée (1.1) présente une forme de «U» inversé.

4. Panier d'achat selon la revendication 3, **caractérisé en ce que** la poignée (1.1) présente deux sections (1.1.1) parallèles à la paroi (1.2.1) du panier (1.2) d'où sort ladite poignée (1.1) et une section horizontale (1.1.2) utilisée pour saisir le panier-chariot (1).

5. Panier d'achat selon la revendication 4, **caractérisé en ce qu'**il est empilable.

6. Panier d'achat selon la revendication 4, **caractérisé en ce que** le panier (1.2) a aussi des nervures de renfort (1.2.2.3) sur sa base (1.2.2), qui sont parallèles aux sections parallèles (1.1.1) de la poignée (1.1).

7. Panier d'achat selon la revendication 1, **caractérisé en ce que** les roues (2) sont couplées dans des trous (1.2.2.1) disposés sur la base (1.2.2) du panier (1.2).

8. Panier d'achat selon la revendication 7, **caractérisé en ce qu'**il y a cinq trous de couplage (1.2.2.1) des roues (2), dont quatre sont disposés aux coins de la base (1.2.2) et un est situé au milieu du côté de la base (1.2.2).parallèle au côté où se trouve la poignée (1.1).

9. Panier d'achat selon la revendication 8, **caractérisé en ce que** dans lesdites roues porteuses libres des trous de couplage (1.2.2.1) autorisées à tourner autour d'un axe vertical et / ou les roues motrices, ayant ladite rotation limitée, sont couplées.
